# EUROPEAN PATENT APPLICATION

(11) **EP 4 651 434 A1**
(43) Date of publication of application: **19.11.2025**
(21) Application number: 24175712.9
(22) Date of filing: 14.05.2024
(51) Int. Cl.: H04L 9/40, H04L 9/32, H04L 9/00

(54) **ESTABLISHING TRUST FOR EXTERNAL DEVICES**

(71) Applicant: Siemens Aktiengesellschaft, 80333 München (DE)
(72) Inventor: DIMITROV, Dimitar, 80636 München (DE); ELSNER, Christoph, 91052 Erlangen (DE); BERGMANN, Philipp, 2351 Wiener Neudorf (AT); SCHÜLER, Bastian, 85567 Grafing (DE)
(74) Representative: Siemens Patent Attorneys

(57) **Abstract**

Methods and systems for establishing trust for external partner devices with verifiable credentials are disclosed. Embodiments include verifying, by a device trust issuer, DTI, adherence to a first level of security of a device external to an organization according to one or more security standards; in response to the first level of security being met, issuing, by the DTI, one or more verifiable credentials, VCs, to the external device; writing, by the DTI, the VCs into an electronic ledger; requesting, by the external device, from a Service Owner, SO, within the organization, access to the resources within the organization by: authenticating the external device at the SO using an identity authentication protocol; and providing the VCs to the SO; verifying, by the SO, and based on the VCs provided by that the external device that the DTI is trusted by the SO; in response to the DTI being trusted by the SO, verifying, by the SO based on the VCs, that the first level of security of the external device matches a second level of security required by the SO; and in response to the first level of security matching the second level of security, granting access to the external device to the resources within the organization.

## Description

### TECHNICAL FIELD

The present disclosure relates to a computer-implemented method and a system for guaranteeing certain security standards for an organization, in particular for establishing trust for external devices not belonging to the organization.

### BACKGROUND

Organizations that host applications or data with high-security demands often require that users of the applications access it through trusted devices. For example, such a device might be a laptop, mobile phone, and/or a virtual machine, which follows certain security standards of an organization. In particular, when working with external partners and developer teams, it is a challenge to ensure that every partner's device is a trusted device.

Conventionally, a device's trust can be established within own organization, when the devices are directly provisioned and managed through the organization itself. In specific cases, a first organization may decide to trust another organization's device trust policies, so that external partners of this organization may be allowed to access the first organization's applications or data. Otherwise, generally, external partners need to be provided with extra devices (e.g. laptop, mobile phone, virtual machine) that conform to the first organization's specific security rules.

Therefore, there is a need to provide improved techniques for establishing trust for external partner devices with different organizations with which they interact.

### SUMMARY

The present disclosure is defined by the independent claims. Dependent claims describe embodiments thereof. This summary is provided to introduce a selection of concepts in a simplified form that are further described below in the detailed description. This summary is not intended to identify key features or essential features of the claimed subject matter, nor is it intended to be used to limit the scope of the claimed subject matter.

The present disclosure provides a novel approach for establishing trust for external partner devices with verifiable credentials. The present disclosure introduces a Device Trust Issuer (DTI) (e.g., a service company), which verifies that an already existing device of an external partner organization adheres to certain security standards, independent of a particular organization, and checks which resources, (e.g., applications or data within an organization) shall be accessed. Adherence to security standards may be checked by the DTI through, for example, running additional software components on the existing devices of external business partners. Additionally, the present disclosure uses the Decentralized Identifiers (DID) and Verifiable Credentials (VC) technology to transfer and verify trust in a decentralized manner through digital certificates.

Embodiments of the present disclosure are generally directed to solutions that enable establishing trust for external partner devices with verifiable credentials. Accordingly, a computer-implemented method for granting access to an external device to resources within an organization is provided. The method may comprise:
verifying, by a device trust issuer, DTI, adherence to a first level of security of the external device according to one or more security standards;
in response to the first level of security being met, issuing, by the DTI, one or more verifiable credentials, VCs, to the external device;
writing, by the DTI, the one or more VCs into an electronic ledger;
requesting, by the external device, from a Service Owner, SO, within the organization, access to the resources within the organization by:
   authenticating the external device at the SO using an identity authentication protocol; and
   providing the one or more VCs to the SO;
verifying, by the SO, and based on the VCs provided by the external device that the DTI is trusted by the SO;
in response to the DTI being trusted by the SO, verifying, by the SO based on the one or more VCs, that the first level of security of the external device matches a second level of security required by the SO; and
in response to the first level of security matching the second level of security, granting access to the external device to the resources within the organization.

In one or more embodiments, the one or more VCs may comprise a decentralized identifier (DID). One advantage of using decentralized identifiers (DIDs) as verifiable credentials is enhanced privacy and control over personal data. DIDs enable individuals to have full ownership and control over their digital identities, as they can create and manage their own DIDs without relying on centralized authorities or intermediaries. This decentralized approach reduces the risk of data breaches and unauthorized access to personal information.

In some embodiments, the method may further comprise authenticating the external device at the SO using an end user identity token. By leveraging end user identity tokens for device authentication, the service owner can establish a higher level of trust and confidence in the devices accessing their services. This helps protect against unauthorized access, data breaches, and fraudulent activities.

In one or more embodiments, the external device may be an already existing device of an external organization. One advantage of allowing the use of already existing devices of external organizations as external devices is increased flexibility and cost-effectiveness.

In one or more embodiments, the one or more security standards may comprise a National Institute of Standards and Technology, NIST, standard. One advantage of incorporating National Institute of Standards and Technology (NIST) standards as part of the security standards in a system is the assurance of robust and widely recognized security practices.

In some embodiments, the method may further comprise running additional software components on the external device by the DTI to verify adherence to the one or more security standards. By running additional software components on the external device, the DTI can actively assess the device's adherence to the specified security standards. These software components can perform various checks, such as scanning for vulnerabilities, verifying configuration settings, or monitoring for suspicious activities.

In one or more embodiments, running additional software components may include installing tools or certificates from the DTI by an end user of the external device to prove the status of the external device.

In some embodiments, the DTI may align with multiple organizations to establish security levels according to one or more security standards.

In some embodiments, the one or more VCs may be regularly updated and stored in an electronic wallet of the external device. One advantage of regularly updating and storing the verifiable credentials (VCs) in an electronic wallet of the external device is improved convenience, accessibility, and portability of the credentials.

In one or more embodiments, the electronic ledger may be a blockchain. One advantage of using a blockchain as the electronic ledger in the system is enhanced security, transparency, and immutability of the stored data.

In one or more embodiments, the one or more VCs may be further written into the electronic ledger by the external device. By allowing the external device to write the VCs directly into the electronic ledger, the process of recording credentials becomes more streamlined and efficient. It eliminates the need for manual data entry or reliance on intermediaries, reducing the potential for human error and delays associated with manual processes.

In some embodiments, authenticating the external device at the SO using an identity authentication protocol may include using an OpenlD Connect, OIDC, standard or an end user VC. By utilizing an established identity authentication protocol like OIDC, the system benefits from a widely adopted and standardized approach to authentication.

Other embodiments may include a system for verifying trustworthiness of external devices requesting access to internal resources within an organization. The system may comprise:
an external device of an external organization;
a device trust issuer, DTI, configured to verify adherence to security standards of the external device of the external organization;
a service owner, SO, configured for secure authentication within the organization, wherein security levels are defined according to industry standards and access to internal resources is restricted to trusted devices managed by the organization;
one or more processing devices; and
one or more storage devices, the one or more storages devices storing computer-readable instructions that, when executed by the one or more of the processors, cause the one or more of the processors to perform the method according to any one of the methods described above.

Other embodiments may include a non-transitory computer-readable storage medium storing computer-executable instructions which, when executed by at least one processor, may cause the at least one processor to perform the method according to any one of the methods described above.

Other embodiments may include a computer program product comprising instructions which, when executed by at least one processor, may cause the at least one processor to perform the method according to any one of the methods described above.

### BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a schematic diagram illustrating a system for establishing trust for external partner devices with verifiable credentials, according to the present disclosure.
Fig. 2 is a schematic diagram illustrating a computer-implemented method for establishing trust for external partner devices with verifiable credentials, according to the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

The present disclosure provides a novel approach for establishing trust for external partner devices with verifiable credentials. The present disclosure introduces a Service Owner (SO) role. For example, the service owner from organization A (Org A) is responsible for secure authentication within the first organization. To enhance the security, internal data should be accessed only from trusted devices. The service owner defines security levels according to industry standards (e.g., National Institute of Standards and Technology - NIST standard). Org A has many partner organizations (i.e., external business partners), which use their own devices. Therefore, the service owner has no transparency over the device trust standards of the end user devices managed by different organizations that service owner's Org A is collaborating with. Neither is the service owner able to install tools or manage these foreign devices in the way that own organization's devices are managed.

By introducing the role of a Device Trust Issuer (DTI) and relying on DID Decentralized Identifiers (DID) technology trust among participants and reliability increases in the whole ecosystem where different organizations are collaborating through different devices. This is especially important for different devices that are independently managed by the different organizations where each organization has their own security standards. The service owner will not need to install additional tools and certificate to devices of partner organizations but will rely on the verifiable credentials (VCs) issued by a certified device trust issuer (DTI) and these verifiable credentials will thus "transfer" the trust.

Decentralized Identifiers (DIDs) are one of the three pillars of a Self-Sovereign Identity which is a model that gives individuals and organizations full ownership and control of their digital identities without relying on a third party.

Self-Sovereign Identity pillars may thus include: 1. a decentralized database (e.g., an electronic ledger or blockchain) that is shared among computers in a blockchain network that records information in a way that makes it very difficult to change, hack, or cheat the system; 2. Decentralized Identifiers (DIDs): Verifiable identifiers created by an user, owned by the user, and independent of any organization; and 3. Verifiable Credentials (VCs): Digital cryptographically-secure versions of paper and digital credentials that people, devices, organizations, etc., can present to verifiers such as other organizations, employers, government agencies, or parties in a supply chain.

Whenever an organization issues someone a Verifiable Credential (VC), their public DID is attached to that VC. Because the public DID (and issuer's public key) is stored on the blockchain, whenever a party wants to verify the authenticity of the credentials, they can check the DID on the blockchain to see if it was really the issuer's private key that signed the VC. This is done without having to contact the issuing party.

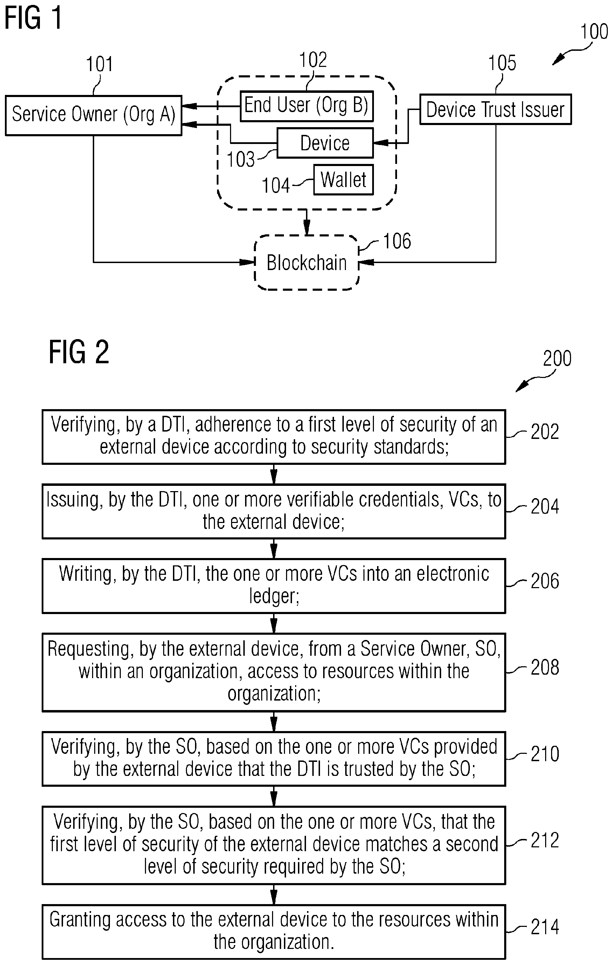

Fig. 1 is a schematic diagram illustrating a system (100) for establishing trust for external partner devices with verifiable credentials, according to the present disclosure.

An end user (102), e.g., from a partner organization ("Org B") may need to access data from Org A in a secure way in order to collaborate or provide a service to Org A. The end user (102) might not be able to prove that their own device (103) can achieve trustworthy security levels imposed by Org A to have the device (103) considered as a trusted device.

The present disclosure ensures that end users from multiple organization are able to prove the status of their devices by only having to install tools or certificates from particular trusted Device Trust Issuers (DTls) (105).

A Device Trust Issuer (DTI) (105) may provide services to service owners (101) from different organizations and may align with them the security levels for their organization according to security standards aligned between multiple organizations (e.g., agreed standards, NIST, industry de-facto standards). The DTI increases the trust in the ecosystem by supporting organizations to prove the device status of their devices, e.g., through running additional software on their devices and verifying their security characteristics. As there may be multiple device trust issuing companies, there can be a challenge of acceptance, as neither service owners, nor end user organizations may want to restrict technology-wise to a single device trust issuer's technology to verify the device trust.

Verifiable Credentials (VCs) are a standardized technology to verify that entities (users, but also machines/devices) in decentralized environments have certain attributes. By providing verifiable device trust services to multiple orgs, based on verifiable credentials, there is no single entity that organizations need to trust in order to have flexible choice of device trust issuers that follow the same approach to issue device trust through verifiable credentials.

The DTI (105) may ensure security guidelines and may regularly issue and/or revoke VCs for an end user device (103) based on the end user device (103) adhering to certain security levels according to certain security standards. For example, the VCs are regularly updated and stored in an electronic wallet (104) of the end user device (103). Additionally, or alternatively the DTI (105) may write the VC into an electronic ledger (106) (e.g., a blockchain). The end user device (103) may request from a Service Owner (SO) (101) of Org A access to resources (e.g., data and/or applications) within Org A. For example, the end user device (103) may authenticate itself at the SO (101) using an identity authentication protocol, such as OpenlD Connect (OIDC) or using an end user device VC. OIDC was built on top of OAuth 2.0 industry-standard protocol for authorization to add authentication. OAuth 2.0, which stands for "Open Authorization", is a standard designed to allow resources such as a website or application to access other resources hosted by other web apps on behalf of a user. The OAuth 2.0 protocol was developed first and then OIDC was added to enhance its capabilities. The difference between the two is that OAuth 2.0 provides authorization, while OIDC provides authentication. OAuth 2.0 is what allows users to gain access to a relying party, using their account with an OpenlD provider, and OIDC is what allows the OpenlD provider to pass along a user profile to the relying party. OIDC also allows organizations to offer their users single sign-on. For example, after OIDC authentication, the end user device (103) may pass the VC to the SO (101). In turn, the SO (101) may verify based on the received VC that the DTI (105) that issued the VC in the first place can be trusted by the SO (101). For example, the SO (101) of Org A may verify that a certain security level imposed by Org A is achieved by the VC, and if that is the case, then the SO (101) may grant access to the end user device (103) to the resources within the organization Org A.

Fig. 2 is a schematic diagram illustrating a computer-implemented method (200) for establishing trust for external partner devices with verifiable credentials, according to the present disclosure. In step (202), a device trust issuer (DTI) (105) may verify adherence to a first level of security of the external device (103) according to one or more security standards. Next (204), in response to the first level of security being met, the DTI (105) may issue one or more verifiable credentials (VCs) to the external device (102). In step (206), the DTI (105) may write the one or more VCs into an electronic ledger (106). In step (208), the external device (103) may request from a Service Owner (SO) (101) within an organization, access to resources (e.g., data or applications) within the organization. The external device (103) may do so by authenticating at the SO (101) using an identity authentication protocol and providing the one or more VCs to the SO (101). In step (210) the SO (101) may verify based on the one or more VCs provided by the external device (103) that the DTI (105) is trusted by the SO (101), and in response to the DTI (105) being trusted by the SO (101), verifying (212), by the SO (101), based on the one or more VCs, that the first level of security of the external device (103) matches a second level of security required by the SO (101). In step (214), in response to the first level of security matching the second level of security, access is granted by the SO (101) to the external device (103) to the resources within the organization.

In one example configuration, the system (100) may include further processing units (processors) and memory. The processors may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. The processors may be programmable hardware capable of executing software instructions stored (to perform the methods described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (100) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (100) may also have input device(s) such as keyboard, mouse, pen, voice input, etc. and/or output device(s) such as a display, speakers, printer, etc. Also included in the system (200) may be one or more communication connections, such as LAN, WAN, point to point, etc. In embodiments, the connections may be operable to facilitate point-to-point communications, connection-oriented communications, connectionless communications, etc. The system (100) may further include interface circuitry configured to control input and output (I/O) data paths of the system (100). For example, such I/O data paths may include data paths for receiving, from end users (102) or applications, VCs for establishing trust for end user devices (103).

The approach described in the present disclosure provides the advantage of ensuring that every organization's partner can guarantee security and thus trustworthiness of their devices to the organization.

Although the present disclosure has been described in accordance with preferred embodiments, it should be clear for the person skilled in the art that modifications are possible in all embodiments. Further possible implementations or alternative solutions of the invention also encompass combinations - that are not explicitly mentioned herein - of features described above or below regarding the embodiments. The person skilled in the art may also add individual or isolated aspects and features to the most basic form of the present disclosure.

## Claims

1. A computer-implemented method (200) for granting access to an external device (103) to resources within an organization, comprising:
verifying (202), by a device trust issuer, DTI (105), adherence to a first level of security of the external device (103) according to one or more security standards;
in response to the first level of security being met, issuing (204), by the DTI (105), one or more verifiable credentials, VCs, to the external device (103);
writing (206), by the DTI (105), the one or more VCs into an electronic ledger (106);
requesting (208), by the external device (103), from a Service Owner, SO (101), within the organization, access to the resources within the organization by:
authenticating the external device (103) at the SO (101) using an identity authentication protocol; and
providing the one or more VCs to the SO (101);
verifying (210), by the SO (101), based on the one or more VCs provided by the external device (103) that the DTI (105) is trusted by the SO (101);
in response to the DTI (105) being trusted by the SO (101), verifying (212), by the SO (101), based on the one or more VCs, that the first level of security of the external device (103) matches a second level of security required by the SO (101); and
in response to the first level of security matching the second level of security, granting (214) access to the external device (103) to the resources within the organization.

2. The computer-implemented method of claim 1, wherein the one or more VCs comprise a decentralized identifier, DID.

3. The computer-implemented method of claim 1, further comprising authenticating the external device at the SO (101) using an end user identity token.

4. The computer-implemented method of any of the preceding claims, wherein the external device (103) is an already existing device of an external organization.

5. The computer-implemented method of any of the preceding claims, wherein the one or more security standards comprise a National Institute of Standards and Technology, NIST, standard.

6. The computer-implemented method of any of the preceding claims, further comprising running additional software components on the external device (103) by the DTI (105) to verify adherence to the one or more security standards.

7. The computer-implemented method of claim 6, wherein running additional software components includes installing tools or certificates from the DTI (105) by an end user (102) of the external device (103) to prove the status of the external device (103).

8. The computer-implemented method of any of the preceding claims, wherein the DTI (105) aligns with multiple organizations to establish security levels according to one or more security standards.

9. The computer-implemented method of any of the preceding claims, wherein one or more VCs are regularly updated and stored in an electronic wallet (104) of the external device (103).

10. The computer-implemented method of any of the preceding claims, wherein the electronic ledger (106) is a blockchain.

11. The computer-implemented method of any of the preceding claims, wherein the VCs are further written into the electronic ledger (106) by the external device (103).

12. The computer-implemented method of any of the preceding claims, wherein authenticating the external device (103) at the SO (101) using an identity authentication protocol includes using an OpenlD Connect, OIDC, standard or an end user VC.

13. A system (200) for verifying trustworthiness of external devices (103) requesting access to internal resources within an organization, comprising:
an external device (103) of an external organization;
a device trust issuer, DTI (105), configured to verify adherence to security standards of the external device (103) of the external organization;
a service owner, SO (101), configured for secure authentication within the organization, wherein security levels are defined according to industry standards and access to internal resources is restricted to trusted devices managed by the organization;
one or more processing devices; and
one or more storage devices, the one or more storages devices storing computer-readable instructions that, when executed by the one or more of the processors, cause the one or more of the processors to perform the method according to any of claims 1 to 12.

14. A non-transitory computer-readable storage medium storing computer-executable instructions which, when executed by at least one processor, may cause the at least one processor to perform the method according to any of claims 1 to 12.

15. A computer program product comprising instructions which when executed by at least one processor, cause the at least one processor to perform the method according to any of claims 1 to 12.
